# EUROPÄISCHE PATENTSCHRIFT

(11) **EP 1 859 183 B1**
(45) Veröffentlichungstag und Bekanntmachung des Hinweises auf die Patenterteilung: **01.10.2008**
(21) Anmeldenummer: 06707418.7
(22) Anmeldetag: 04.03.2006
(51) Int. Cl.: F16H 61/12, F16H 59/70, F16H 61/02, F16H 61/18

(54) **STEUERVORRICHTUNG FÜR EIN GETRIEBE**
GEAR CONTROL DEVICE
DISPOSITIF DE COMMANDE POUR UNE TRANSMISSION

(30) Priorität: 18.03.2005 DE 102005012590
(43) Veröffentlichungstag der Anmeldung: 28.11.2007
(73) Patentinhaber: ZF Friedrichshafen AG, 88038 Friedrichshafen (DE)
(72) Erfinder: GIERER, Georg, 88079 Kressbronn (DE); SCHMIDT, Thilo, 88074 Meckenbeuren (DE)
(86) Internationale Anmeldenummer: PCT/EP2006/001993
(87) Internationale Veröffentlichungsnummer: WO 2006/097209

(56) Entgegenhaltungen:
- EP-A- 1 431 626
- DE-A- 19 858 540
- DE-A1- 19 858 541
- DE-A1- 19 858 543
- US-A- 5 417 626
- PATENT ABSTRACTS OF JAPAN Bd. 1997, Nr. 06, 30. Juni 1997 (1997-06-30) & JP 09 032913 A (TOYOTA MOTOR CORP; AISIN AW CO LTD), 7. Februar 1997 (1997-02-07)

## Beschreibung

Die Erfindung betrifft eine Steuervorrichtung für ein Getriebe, insbesondere für ein Automatgetriebe eines Fahrzeugs gemäß der im Oberbegriff des Patentanspruches 1 näher definierten Art.

Aus der gattungsgemäßen DE-A-198 58 540, der DE 198 58 541 A1 sowie der DE 198 58 543 A1 sind elektrohydraulische Getriebesteuervorrichtungen für Sechs-Gang-Automatgetriebe mit fünf Schaltelementen bekannt, bei welchen Schaltelemente sowohl zur Darstellung von Übersetzungen für Vorwärtsfahrt als auch zur Darstellung wenigstens einer Übersetzung für Rückwärtsfahrt in den Kraftfluss eines Antriebsstranges eines Fahrzeugs zugeschaltet werden.

Nachteilig dabei ist jedoch, dass im Getriebe bei einer Fehlansteuerung jederzeit auch ohne entsprechende Fahrerwunschvorgabe ein Wechsel von einer Übersetzung für Vorwärtsfahrt in die wenigstens eine Übersetzung für Rückwärtsfahrt auftreten kann, wodurch einerseits sicherheitskritische Fahrsituationen verursacht werden können und andererseits unzulässig hohe Belastungen im Bereich des gesamten Antriebsstranges eines Fahrzeugs Bauteile beschädigen können.

Um einen unerwünschten Übersetzungswechsel in einem Getriebe zu vermeiden, sind beispielsweise Drucksensoren oder Ventilwegsensoren vorgesehen, mittels welchen vor einem Übersetzungswechsel eine getriebesteuervorrichtungsseitige Fehlansteuerung ermittelbar ist. Damit ist ein Getriebe mit einer Absicherung ausgebildet, die jedoch aufwändig und kostenintensiv ist.

Zusätzlich werden bei den aus dem Stand der Technik bekannten Getriebesteuervorrichtungen zwei der Schaltelemente über ein gemeinsames Drucksteuerventil wechselweise angesteuert. Das führt dazu, dass die Verbindungen zwischen dem Drucksteuerventil und den damit ansteuerbaren Schaltelementen während der wechselnden Ansteuerung jeweils temporär unterbrochen ist und sich in den Verbindungsleitungen zwischen dem Drucksteuerventil und den damit ansteuerbaren Schaltelementen Luft ansammelt. Diese Luftansammlungen sind applikativ nur mit hohem Aufwand beseitigbar bzw. über entsprechende und hohe Kosten verursachende hydraulische Maßnahmen verhinderbar. Zudern sind beide Vorgehensweisen nur mit einer äußerst aufwändigen Ansteuerung einer entsprechend umgestalteten elektrohydraulischen Getriebesteuervorrichtung umsetzbar.

Der vorliegenden Erfindung liegt daher die Aufgabe zugrunde, eine Steuervorrichtung für ein Getriebe zur Verfügung zu stellen, mittels welcher sowohl ein ungewolltes Umschalten im Getriebe zwischen einer Übersetzung für Vorwärtsfahrt und einer Übersetzung für Rückwärtsfahrt als auch Luftansammlungen kostengünstig und mit geringem Steuer- und Regelaufwand sicher verhindert werden.

Erfindungsgemäß wird diese Aufgabe mit einer Steuervorrichtung für ein Getriebe gemäß den Merkmalen des Patentanspruches 1 gelöst.

Die erfindungsgemäße Steuervorrichtung für ein Getriebe, insbesondere für ein Automatgetriebe eines Fahrzeugs, ist mit einem über eine elektrische Getriebesteuereinrichtung ansteuerbaren hydraulischen Steuersystem ausgebildet, das mehrere von der Getriebesteuereinrichtung elektrisch ansteuerbare Drucksteuerventile und mehrere jeweils von einem von den Drucksteuerventilen einstellbaren hydraulischen Vorsteuerdruck ansteuerbare Schaltventile und Druckregelventile umfasst. Des Weiteren sind über das hydraulische Steuersystem in Abhängigkeit einer Wählhebelposition eines manuellen Wählschiebers mehrere Schaltelemente derart mit einem hydraulischen Ansteuerdruck ansteuerbar, dass durch jeweils zwei gleichzeitig in den Kraftfluss eines Getriebes zugeschaltete Schaltelemente verschiedene Übersetzungen eines Getriebes für Vorwärtsfahrt oder für Rückwärtsfahrt einstellbar sind. Die Übersetzung für Rückwärtsfahrt ist über zwei gleichzeitig zugeschaltete Schaltelemente darstellbar, welche jeweils in Kombination mit jeweils einem weiteren der Schaltelemente zur Darstellung wenigstens einer Übersetzung für Vorwärtsfahrt vorgesehen sind.

Dadurch, dass jedem der Schaltelemente ein separates Drucksteuerventil zugeordnet ist, werden die aus dem Stand der Technik bekannten Luftansammlungen im hydraulischen Steuersystem der erfindungsgemäßen Steuervorrichtung auf einfache und kostengünstige Art und Weise vermieden.

Des Weiteren wird mit der erfindungsgemäßen Steuervorrichtung für ein Getriebe eine unerwünschte Übersetzungsänderung von einer Übersetzung für Vorwärtsfahrt zu einer Übersetzung für Rückwärtsfahrt auf konstruktiv einfache Weise sowie mit einem geringen Steuer- und Regelaufwand verhindert.

Dies wird dadurch erreicht, dass die erfindungsgemäße Steuervorrichtung mit einem Zuschaltverhinderungsventil ausgeführt ist, welches in Richtung einer ersten Schaltstellung entgegen einer Federeinrichtung mit einem Ansteuerdruck des ersten Schaltelementes zur Darstellung der Übersetzung für Rückwärtsfahrt beaufschlagbar ist und dass in Richtung einer zweiten Schaltstellung mit einem dem Ansteuerdruck des ersten Schaltelementes zur Darstellung der Übersetzung für Rückwärtsfahrt äquivalenten Drucksignal ansteuerbar ist, wobei eine Druckversorgungsleitung des zweiten Schaltelementes zur Darstellung der Übersetzung für Rückwärtsfahrt in der ersten Schaltstellung des Zuschaltverhinderungsventiles gesperrt ist und in der zweiten Schaltstellung des Schaltventiles freigegeben ist.

Damit wird eine Fehlansteuerung der Schaltelemente eines Getriebes sowohl bei einer Wählhebelposition für Vorwärtsfahrt als auch bei einer Wählhebelposition für Rückwärtsfahrt über ein hydraulisch ansteuerbares und vorzugsweise in herkömmlicher Weise ausgeführtes Schaltventil vermieden, dass ein gleichzeitiges Zuschalten der beiden zur Darstellung der Übersetzung für Rückwärtsfahrt vorgesehenen Schaltelemente bedarfsweise zulässt oder verhindert.

Weitere Vorteile und vorteilhafte Ausgestaltungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.

Es zeigt:
- Fig. 1: ein vereinfacht dargestelltes hydraulisches Steuerschema der erfindungsgemäßen Steuervorrichtung für ein Getriebe;
- Fig. 2: ein vereinfacht dargestelltes hydraulisches Steuerschema einer zweiten Ausführungsform der erfindungsgemäßen Steuervorrichtung;
- Fig. 3: ein hydraulisches Steuerschema einer dritten Ausführungsform der erfindungsgemäßen Steuervorrichtung;
- Fig. 4: eine Schaltlogik der erfindungsgemäßen Steuervorrichtung gemäß Fig. 1, Fig. 2 und Fig. 3;
- Fig. 5: mehrere Verläufe von Ansteuerdrücken von Schaltelementen eines Getriebes während einer Mehrfahrrückschaltung, während der eine Ventilcharakteristik des Zuschaltverhinderungsventiles betriebszustandsabhängig verändert wird; und
- Fig. 6: eine Gegenüberstellung von Verläufen der Ansteuerdrücke der Schaltelemente zur Darstellung von Notgangübersetzungen während der Zuschaltung dieser Schaltelemente im Notbetrieb der erfindungsgemäßen Steuervorrichtung gemäß Fig. 2 bzw. Fig. 3.

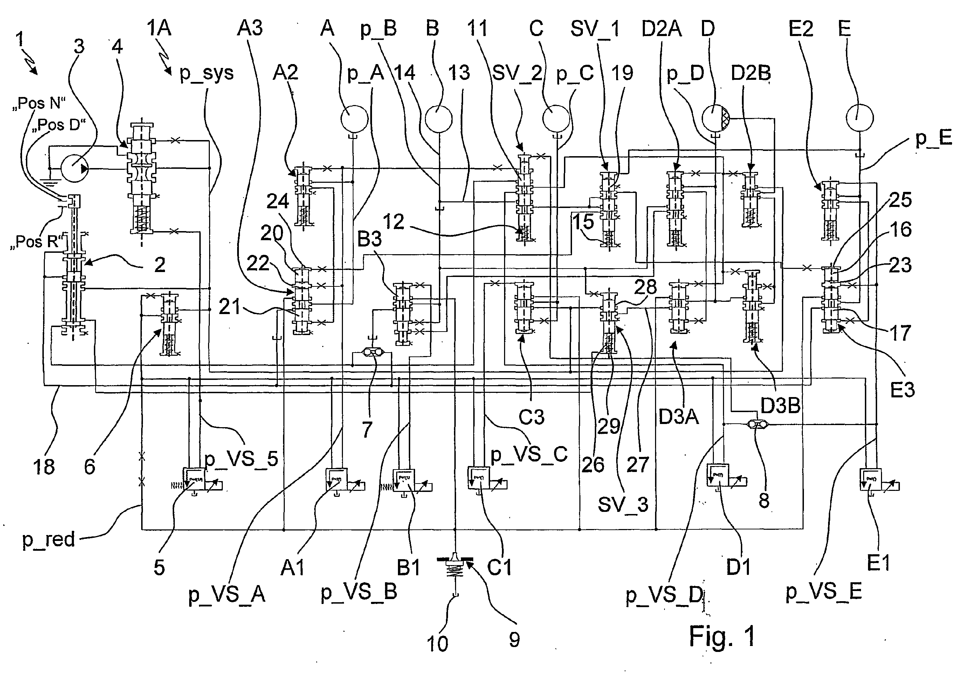

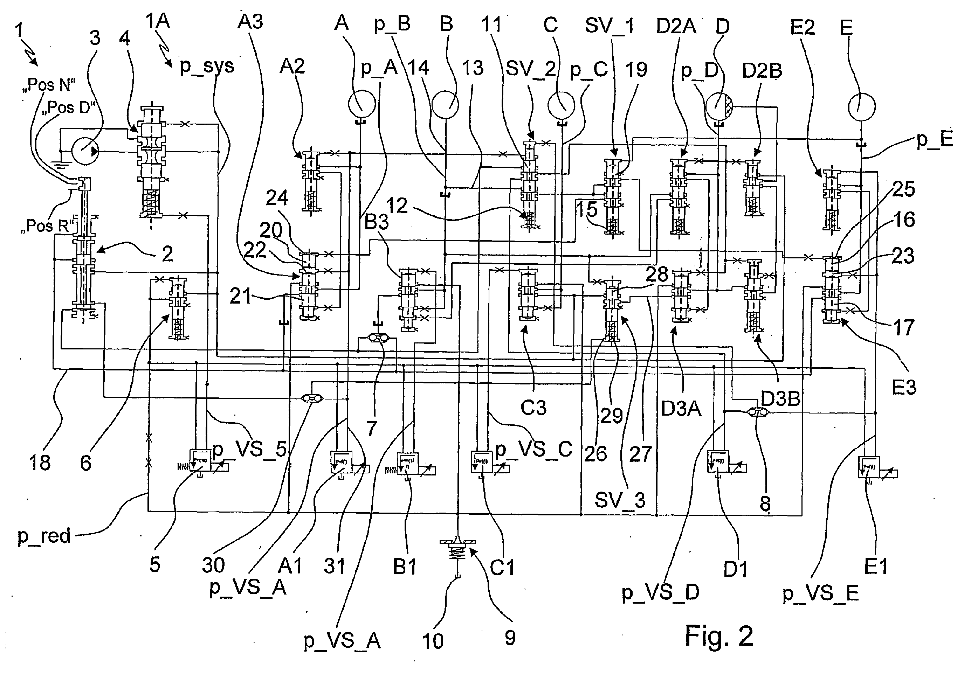

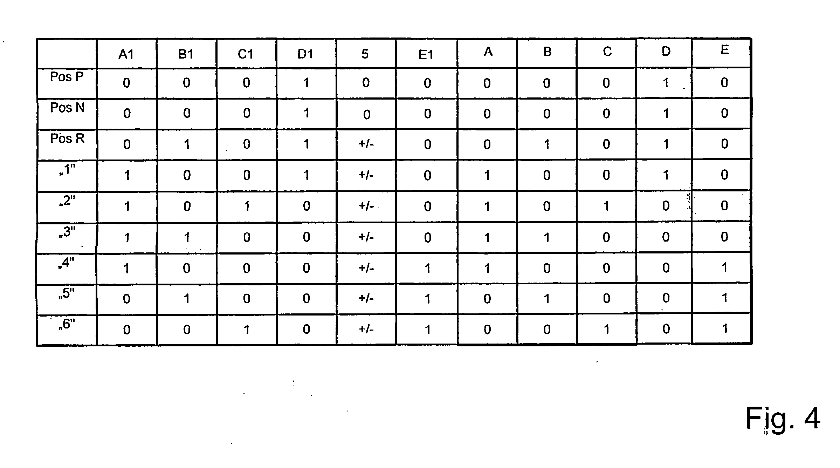

In Fig. 1 und Fig. 2 ist jeweils ein hydraulisches Steuerschema einer elektrohydraulischen Steuervorrichtung 1 schematisiert dargestellt, welche zur Ansteuerung eines nicht näher dargestellten und vorzugsweise als Automatgetriebe ausgeführten Getriebes vorgesehen ist und ein hydraulisches Steuersystem 1A umfasst. In dem Automatgetriebe sind gemäß der in Fig. 4 dargestellten Schaltlogik sechs Übersetzungen "1", "2",-"3", "4", "5", "6" für Vorwärtsfahrt und eine Übersetzung "R" für Rückwärtsfahrt durch entsprechendes Zu-und Abschalten von fünf Schaltelementen A, B, C, D und E darstellbar, wobei die jeweils einzulegende Übersetzung in Abhängigkeit einer über einen Wählschieber 2 generierbaren Fahrerwunschvorgabe sowie in Abhängigkeit verschiedener in einer ebenfalls nicht näher dargestellten elektrischen Getriebesteuereinrichtung abgelegten Schaltstrategien eingelegt werden.

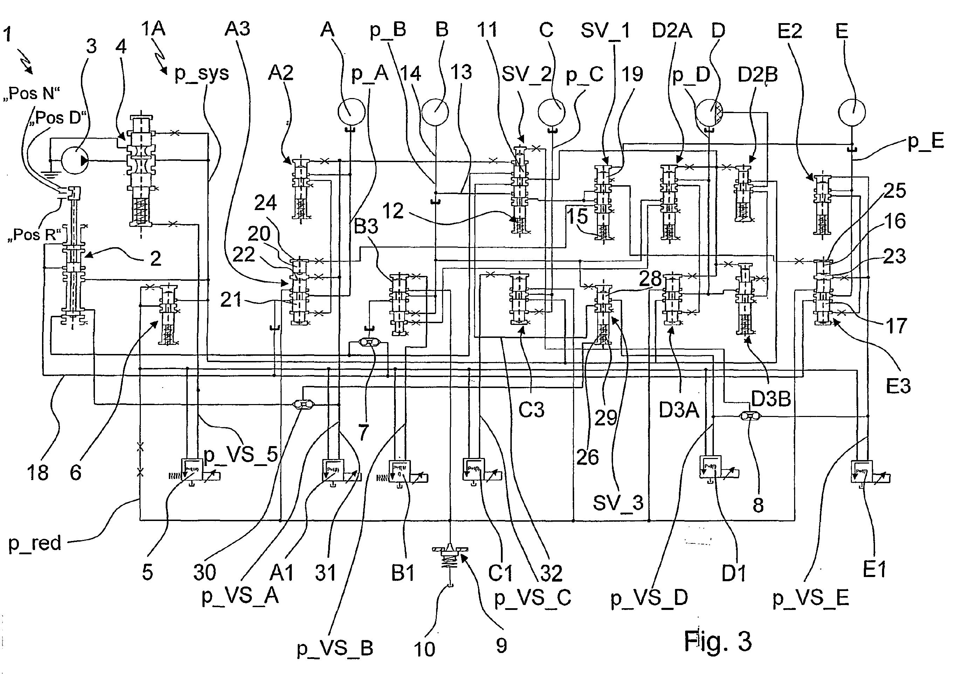

Nachfolgend wird der erfindungsgemäße Gegenstand zunächst anhand des Steuerschemas gemäß Fig. 1 näher beschrieben, wobei sich das Steuerschema gemäß Fig. 2 bzw. Fig. 3 von dem Steuerschema gemäß Fig. 1 nur in Teilbereichen unterscheiden, so dass in der späteren Beschreibung zu Fig. 2 und Fig. 3 lediglich auf diese Teilbereiche näher Bezug genommen wird und ansonsten auf die nachfolgende Beschreibung zu Fig. 1 verwiesen wird.

Der dargestellte Wählschieber 2 ist in verschiedene Wählhebelpositionen "Pos D", "Pos P", "Pos N", "Pos R", verstellbar, wobei in einer Wählhebelposition "Pos D" die Übersetzungen "1" bis "6" für Vorwärtsfahrt in dem Automatgetriebe einlegbar sind. In einer zweiten Wählhebelposition "Pos N" ist ein Kraftfluss eines Antriebsstranges eines Fahrzeugs im Bereich des Automatgetriebes derart unterbrochen, dass über das Automatgetriebe im Wesentlichen kein Drehmoment vom Abtrieb in Richtung der Antriebsmaschine oder in umgekehrter Richtung führbar ist.

In einer dritten Wählhebelposition "Pos R" wird im Automatgetriebe die Übersetzung "R" für Rückwärtsfahrt eingelegt, während in einer vierten nicht näher dargestellten Wählhebelposition "Pos P" eine mechanische Parksperre eingelegt wird, womit der Abtrieb eines Fahrzeugs in an sich bekannter Art und Weise drehfest gehalten ist.

Zusätzlich ist eine Hydraulikpumpe 3 vorgesehen, mittels welcher in an sich bekannter Weise in Verbindung mit einem stromab der Hydraulikpumpe angeordneten Systemdruckventil 4, weiches als Druckbegrenzungsventil ausgeführt ist, ein für die Ansteuerung der Schaltelemente A bis E erforderlicher Systemdruck p_sys zur Verfügung gestellt werden kann.

Des Weiteren umfasst die elektrohydraulische Steuervorrichtung 1 mehrere Drucksteuerventile A1, B1, C1, D1 und E1, welche über die elektrische Getriebesteuereinrichtung elektrisch ansteuerbar sind, entsprechend ihrer Ausführung in bestromtem Zustand geöffnet oder geschlossen sind und von welchen jeweils eines jeweils einem Schaltelement A, B, C, D, E zugeordnet ist. Ein Drucksteuerventil 5 ist dem Systemdruckventil 4 derart zugeordnet, so dass der Systemdruck p_sys bei aktiver Getriebesteuereinrichtung über einen Vorsteuerdruck p_VS_5 modulierbar ist, wobei das Drucksteuerventil 5 in unbestromtem Zustand vollständig geöffnet ist und der Systemdruck p_sys auf seinen maximalen Druckwert eingestellt ist. In bestromtem Zustand des Drucksteuerventiles 5 wird der Systemdruck p_sys in Abhängigkeit der elektrischen Ansteuerung durch das Drucksteuerventil 5 in Abhängigkeit einer Steuervorgabe der elektrischen Getriebesteuereinrichtung eingestellt. Zudem sind mehrere Schaltventile A2, D2A, D2B, E2, SV_1, SV_2 und SV_3 sowie mehrere Druckregelventile A3, B3, C3, D3A, D3B und E3 vorgesehen.

Stromab des Systemdruckventiles 4 ist ein als Druckreduzierventil ausgebildetes Reduzierventil 6 vorgesehen, über welches ein den Drucksteuerventilen 5, A1, B1, C1, D1, E1 zuführbarer Reduzierdruck p_red eingeregelt wird.

Der jeweils an den Drucksteuerventilen 5, A1, B1, C1, D1 und E1 anliegende Steuerdruck p_red wird bei aktiver Getriebesteuereinrichtung in Abhängigkeit der Bestromung der Drucksteuerventile 5, A1, B1, C1, D1, E1 entsprechend gewandelt zum Systemdruckventil 4, den Schaltventilen und den Druckregelventilen der elektrohydraulischen Steuervorrichtung 1 als so genannter Vorsteuerdruck p_VS geführt, wobei der jeweils für ein Schaltelement A bis E vorgesehene Vorsteuerdruck p_VS jeweils durch die Bezeichnung des damit korrespondierenden Schaltelementes A bis E erweitert ist. So ist beispielsweise der Vorsteuerdruck p_VS_A der Vorsteuerdruck für das Schaltelement A.

Zusätzlich umfasst die elektrohydraulische Steuervorrichtung 1 so genannte Oderventile 7 und 8, welche jeweils zwei zugehende und eine abgehende Leitung aufweisen, wobei jeweils die zugehende Leitung mit der abgehenden Leitung über das Oderventil 7 bzw. 8 verbunden wird, in der jeweils der höhere hydraulische Druck vorliegt. Darüber hinaus ist stromab des Reduzierventiles 6 zwischen dem Reduzierventil 6 und einem Druckmittelreservoir bzw. einem Ölsumpf 10 des Automatgetriebes ein als Plattenventil ausgeführtes Druckbegrenzungsventil 9 angeordnet, mittels dem im hydraulischen System der elektrohydraulischen Steuervorrichtung 1 ein so genannter Vorbefülldruck, der vorzugsweise im Bereich von 0,25 bar liegt, aufrechterhalten wird, um den Eintritt von Luft in das hydraulische Leitungssystem der elektrohydraulischen Steuervorrichtung 1 zu vermeiden.

In Abhängigkeit einer fahrerseitig eingelegten Wählhebelposition des Wählschiebers 2 werden die Drucksteuerventile 5, A1, B1, C1, D1 und E1 sowie die Schaltelemente A bis E in der in Fig. 4 in tabellarischer Form dargestellten Schaltlogik angesteuert, wobei die Ziffer 0 jeweils einen inaktiven Zustand des betreffenden Bauteiles und die Ziffer 1 jeweils einen aktiven Zustand des betreffenden Bauteils in der Schaltlogik wiedergibt.

So ist beispielsweise bei angeforderter erster Übersetzung "1" das Drucksteuerventil A1, welches in bestromtem Zustand, d. h. bei aktiver Getriebesteuereinrichtung, geöffnet ist und in Abhängigkeit der Bestromung des vom Reduzierventil 6 anliegenden Steuerdruck p_red in entsprechend gewandelter Form zu dem lediglich zwei Schaltstellungen aufweisenden Schaltventil A2 und dem Druckregelventil A3 des Schaltelementes A weiterleitet.

Dabei wird das Drucksteuerventil A1 derart bestromt, dass das Schaltventil A2 und das Druckregelventil A3 jeweils mit einem Vorsteuerdruck p_VS_A beaufschlagt werden und der an dem Druckregelventil A3 über den Wählschieber 2 anstehende Systemdruck p_sys in der erforderlichen Art und Weise zu dem Schaltelement A als Ansteuerdruck p_A geführt wird.

Gleichzeitig wird das Drucksteuerventil D1, welches in bestromtem Zustand ebenfalls geöffnet ist, von der Getriebesteuereinrichtung in dem für die Zuschaltung des Schaltelementes D erforderlichen Umfang elektrisch angesteuert, so dass der Steuerdruck p_red auf den dafür erforderlichen Vorsteuerdruck p_VS_D adaptiert wird und die Schaltventile D2A, D2B sowie die Druckregelventile D3A, D3B mit dem Vorsteuerdruck p_VS_D angesteuert werden. Diese Ansteuerung führt wiederum dazu, dass der über das Schaltventil SV_3 am Druckregelventil D2A anliegende Systemdruck p_sys als Ansteuerdruck p_D des Schaltelementes D an diesem in der für die Zuschaltung des Schaltelementes D erforderlichen Höhe anliegt.

Des Weiteren sind in der in Fig. 4 gezeigten Schaltlogik Felder mit dem Zeichen "+/-" beschriftet, wobei dieses Zeichen jeweils eine Regelphase des damit gekennzeichneten Bauteils der elektrohydraulischen Steuervorrichtung 1 bei aktiver Getriebesteuereinrichtung wiedergibt, weshalb derartig gekennzeichnete Bauteile nicht wie die anderen Elemente exakt einer bestimmten Schaltlogik zuordenbar sind.

Die verschiedenen Übersetzungen "1" bis "6" für Vorwärtsfahrt und die Übersetzung "R" für Rückwärtsfahrt werden jeweils durch zwei gleichzeitig in den Kraftfluss des Getriebes zugeschaltete Schaltelemente im Automatgetriebe eingelegt, wobei die Übersetzungen "1" bis "3" einem ersten Übersetzungsbereich und die Übersetzungen "4" bis "6" einem zweiten Übersetzungsbereich zugeordnet sind. Die Übersetzung "R" für Rückwärtsfahrt ist vorliegend als einzige Übersetzung einem dritten Übersetzungsbereich zugeordnet.

Darüber hinaus geht aus der Schaltlogik hervor, dass zur Darstellung der Übersetzungen "1" bis "3" des ersten Übersetzungsbereichs jeweils das Schaltelement A in Verbindung mit dem Schaltelement D, dem Schaltelement C oder dem Schaltelement B in den Kraftfluss des Getriebes zugeschaltet ist, während das Schaltelement E zur Darstellung der Übersetzungen "4" bis "6" des zweiten Übersetzungsbereichs in Verbindung mit jeweils einem weiteren Schaltelement A, B oder C in den Kraftfluss zugeschaltet ist. Die Übersetzung "R" wird vorliegend durch die gleichzeitig zugeschalteten Schaltelemente B und D im Getriebe eingelegt.

Daraus ergibt sich auch, dass das Schaltelement B in Kombination mit dem Schaltelement A zur Darstellung der dritten Übersetzung "3" des ersten Übersetzungsbereichs als auch in Kombination mit dem Schaltelement E zur Darstellung der fünften Übersetzung "5" des zweiten Übersetzungsbereichs und zusätzlich gemeinsam mit dem Schaltelement D zur Darstellung der Übersetzung "R" für Rückwärtsfahrt in den Kraftfluss des Automatgetriebes zugeschaltet wird.

Um zuverlässig theoretisch mögliche Fehlansteuerungen des Automatgetriebes zu verhindern, bei denen der Wählschieber 2 in der Wählhebelposition "Pos D" eingelegt ist und im Automatgetriebe fälschlicherweise die Übersetzung "R" für Rückwärtsfahrt eingelegt wird, oder bei denen im Getriebe eine der Übersetzungen "1", "3" oder "5" für Vorwärtsfahrt eingelegt wird, obwohl der Wählschieber 2 sich in der Wählhebelposition "Pos R" für Rückwärtsfahrt befindet, ist bei der erfindungsgemäßen elektrohydraulischen Steuervorrichtung 1 ein als Zuschaltverhinderungsventil bezeichnetes Schaltventil SV_3 vorgesehen.

Das Zuschaltverhinderungsventil SV_3 ist vorliegend in Richtung einer in Fig. 1, Fig. 2 und Fig. 3 näher dargestellten ersten Schaltstellung entgegen einer Federeinrichtung 26 mit dem Ansteuerdruck p_B des ersten Schaltelementes B zur Darstellung der Übersetzung "R" für Rückwärtsfahrt ausgehend von einer Ansteuerleitung 14 des Schaltelementes B, welche zwischen dem Druckregelventil B3 des Schaltelementes B und einem nicht näher dargestellten Betätigungskolben des als reibschlüssiges Schaltelement ausgeführten Schaltelementes B verläuft, beaufschlagbar.

Darüber hinaus ist das Zuschaltverhinderungsventil SV_3 in Richtung einer zweiten Schaltstellung mit einem dem Ansteuerdruck p_B des ersten Schaltelementes B zur Darstellung der Übersetzung "R" für Rückwärtsfahrt äquivalenten Drucksignal ansteuerbar, wobei das Drucksignal bei allen in der Zeichnung dargestellten Ausführungsbeispielen der Steuervorrichtung 1 dem über das Systemdruckventil 4 eingestellten Systemdruck p_sys entspricht, der vom Systemdruckventil 4 über den Wählschieber 2 bei einer Wählhebelposition "Pos R" für Rückwärtsfahrt an dem Zuschaltverhinderungsventil SV_3 anliegt. Dieses über den Wählschieber 2 zu dem Zuschaltverhinderungsventil SV_3 durchgeschaltete und dem Systemdruck p_sys entsprechende Drucksignal wird bei der Wählhebelposition "Pos D" für Vorwärtsfahrt des Wählschiebers 2 nicht über den Wählschieber 2 zu dem Zuschaltverhinderungsventil SV_3 durchgeschaltet.

In der in Fig. 1 und Fig. 2 dargestellten ersten Schaltstellung des Zuschaltverhinderungsventiles SV_3 ist eine Druckversorgungsleitung 27, über welche der vom Systemdruckventil 4 eingestellte Systemdruck p_sys in Richtung des Druckregelventiles D3A führbar ist, gesperrt, so dass das zweite Schaltelement D zur Darstellung der Übersetzung "R" für Rückwärtsfahrt nicht mit dem für die Zuschaltung erforderlichen Ansteuerdruck p_D beaufschlagt werden kann.

In der zweiten vollständig umgeschalteten Schaltstellung des Zuschaltverhinderungsventiles SV_3 ist die Druckversorgungsleitung 27 des Schaltelementes D freigegeben, so dass der am Druckregelventil D3A anliegende Systemdruck p_sys in Abhängigkeit des über das Drucksteuerventil D1 eingestellten Vorsteuerdrucks p_VS_D in entsprechend adaptierter Höhe dem Schaltelement D als Ansteuerdruck zuführbar ist.

Die vorbeschriebene Vorschaltung des Zuschaltverhinderungsventiles SV_3 führt vorteilhafterweise dazu, dass das erste Schaltelement B und das zweite Schaltelement D zur Darstellung der Übersetzung "R" für Rückwärtsfahrt nur bei der Wählhebelposition "Pos R" für Rückwärtsfahrt des Wählschieber 2 gleichzeitig in den Kraftfluss des Automatgetriebes zuschaltbar sind. Die resultiert aus der Tatsache, dass das vom Wählschieber 2 ausgehende Drucksignal p_sys in dieser Stellung des Wählschiebers 2 am Zuschaltverhinderungsventil SV_3 in Richtung seiner zweiten Schaltstellung anliegt und der Ansteuerdruck des Schaltelementes B gleichzeitig am Ventilschieber 28 des Zuschaltverhinderungsventiles SV_3 in Richtung der ersten Schaltstellung des Zuschaltverhinderungsventiles SV_3 angreift.

An dem Ventilschieber 28 des Zuschaltverhinderungsventiles SV_3 greift in der Wählhebelposition "Pos R" für Rückwärtsfahrt des Wählschiebers 2 eine sich aus dem Flächenverhältnis des Ventilschiebers 28 und den jeweils an den Wirkflächen des Ventilschiebers 28 anliegenden Steuerdrücken p_sys und p_B sowie der Federkraft der Federeinrichtung 26 zusammensetzende Gesamtkraftkomponente an, die den Ventilschieber 28 bei zugeschaltetem Schaltelement B in die zweite Schaltstellung des Zuschaltverhinderungsventiles SV_3 verstellt, wodurch das Schaltelement D und das Schaltelement B zur Darstellung des Rückwärtsganges "R" gleichzeitig in den Kraftfluss des Automatgetriebes zuschaltbar sind.

In der Wählhebelposition "Pos D" für Vorwärtsfahrt des Wählschiebers 2 ist die Verbindung zwischen dem Systemdruckventit 4 und einem Steuerraum 29 des Zuschaltverhinderungsventiles SV_3, in dem auch die Federeinrichtung 26 des Zuschaltverhinderungsventiles SV_3 angeordnet ist, unterbrochen, so dass der Ventilschieber 28 des Zuschaltverhinderungsventiles SV_3 ab Überschreiten eines Schwellwerts p_B_schwell1 des Ansteuerdruckes p_B des Schaltelementes B, der in der Beschreibung zu Fig. 4 näher erläutert wird, entgegen der Federeinrichtung 26 in die in Fig. 1, Fig. 2 und Fig. 3 dargestellte erste Schaltstellung umgeschaltet wird und die Druckversorgung des zweiten Schaltelementes D zur Darstellung der Übersetzung "R" für Rückwärtsfahrt mit dem Systemdruck p_sys im Bereich des Zuschaltverhinderungsventiles SV_3 wirkungsvoll unterbrochen ist.

Damit ist eine gleichzeitige Zuschaltung der Schaltelemente B und D bei fahrerseitig angeforderter Vorwärtsfahrt in allen Betriebsbereichen des Automatgetriebes bzw. der elektrohydraulischen Steuervorrichtung 1 sicher vermieden. Zudem ist die Einstellung einer Übersetzung "1" bis "6" für Vorwärtsfahrt bei der Wählhebelposition "Pos R" des Wählschiebers 2 dadurch wirkungsvoll vermieden, dass die zur Darstellung einer Übersetzung "1" bis "6" für Vorwärtsfahrt in Verbindung mit dem Schaltelement B oder dem Schaltelement D gleichzeitig in den Kraftfluss zuzuschaltenden Schaltelemente A und E nicht mit dem für die Zuschaltung erforderlichen Systemdruck p_sys beaufschlagt werden.

Alternativ kann es jedoch auch vorgesehen sein, dass über das Zuschaltverhinderungsventil SV_3 eine in Fig. 3 dargestellte Vorsteuerdruckleitung 32 zwischen dem Drucksteuerventil D1 und den Druckregelventilen D3A, D3B sowie den Schaltventilen D2A und D2B, über welche der Vorsteuerdruck p_VS_D an den Druckregelventilen und Schaltventilen anliegt, in der vorbeschriebenen Art und Weise in Abhängigkeit des vom Schaltelement B anliegenden Ansteuerdruck p_B, des vom Wählschieber 2 betriebszustandsabhängig durchgeschalteten Systemdruck p_sys und der Federkraft der Federeinrichtung 26 des Zuschaltverhinderungsventiles SV_3 gesperrt oder freigegeben ist, um ein gleichzeitiges Zuschalten der Schaltelemente B und D bei angewählter Vorwärtsfahrt wirkungsvoll zu vermeiden.

Zusätzlich ist bei dem in Fig. 2 und Fig. 3 dargestellten zweiten und dritten Ausführungsbeispiel der erfindungsgemäßen elektrohydraulischen Steuervorrichtung 1 zwischen dem Steuerraum 29 des Zuschaltverhinderungsventiles SV_3 und dem Wählschieber 2 ein als Kugelventil ausgeführtes Oderventil 30 vorgesehen, dessen eine Zuleitung mit dem Wählschieber 2 und dessen andere Zuleitung mit einer Vorsteuerdruckleitung 31, über welche der über das Drucksteuerventil A1 einstellbare Vorsteuerdruck p_VS_A in Richtung des Druckregelventiles A3 und des Schaltventiles A2 des Schaltelementes A führbar ist, verbunden. Die Ableitung des Oderventiles 30 ist direkt mit dem Steuerraum 29 des Zuschaltverhinderungsventiles SV_3 verbunden, so dass der Steuerraum 29 des Zuschaltverhinderungsventiles SV_3 entweder mit dem Wählschieber 2 oder der Vorsteuerdruckleitung 31 in Wirkverbindung steht und der Ventilschieber 28 auf der selben Wirkfläche mit dem Drucksignal p_sys oder dem weiteren Drucksignal p_VS_A beaufschlagt wird. Selbstverständlich liegt es im Ermessen des Fachmannes, das Drucksignal und das weitere Drucksignal in nicht näher dargestellter Art und Weise auf verschiedene Wirkflächen des Ventilschiebers des Zuschaltverhinderungsventils zu führen.

Mit dieser Vorgehensweise ist die Ventilcharakteristik des Zuschaltverhinderungsventiles SV_3 bei fahrerseitig angewählter Vorwärtsfahrt derart veränderbar, dass die Übertragungsfähigkeit der Schaltelemente B und D auch bei angewählter Vorwärtsfahrt gleichzeitig auf ein vordefiniertes Niveau oberhalb eines ersten Druckschwellwerts p_ELschwelil anhebbar ist, um ein so genanntes kurzfristiges Überschneiden der beiden Schaltelemente B und D, wie es bei Mehrfachschaltungen auftritt, zu ermöglichen.

Die bei angewählter Vorwärtsfahrt zusätzlich mögliche Beaufschlagung des Steuerraums 29 des Zuschaltverhinderungsventiles SV_3 mit dem Vorsteuerdruck führt zu der in Fig. 4 dargestellten Anhebung des Reaktionsdruckniveaus des Zuschaltverhinderungsventiles SV_3 vom ersten Druckschwellwert p_B_schwelll, der mit der Federkraft der Federeinrichtung 26 des Zuschaltverhinderungsventiles SV_3 korrespondiert, auf einen zweiten Druckschwellwert p_B_schwell2. Der zweite Druckschwellwert p_ELschwel12 des Ansteuerdruckes p_B des Schaltelementes B entspricht der jeweils aus der Federkraft der Federeinrichtung 26 und dem Vorsteuerdruck p_VS_A des Schaltelementes A resultierenden Gegenkraft, oberhalb welcher das Zuschaltverhinderungsventil SV_3 aus seiner zweiten Schaltstellung in seine erste Schaltstellung umgeschaltet wird.

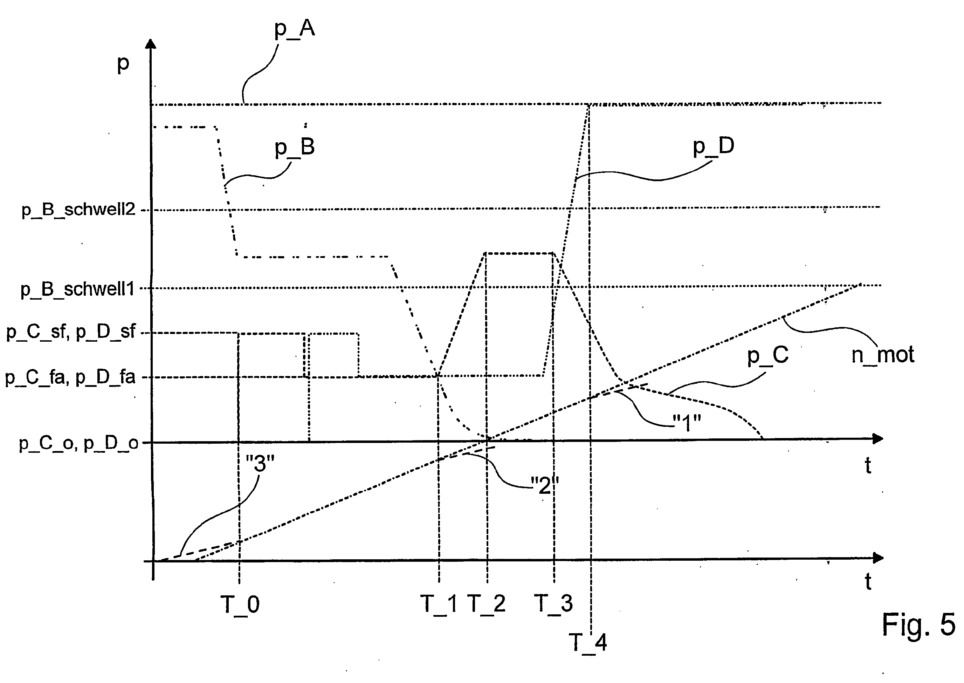

Des Weiteren sind in Fig. 5 die Verläufe der Ansteuerdrücke p_A, p_B, p_C und p_D der an einer Mehrfachrückschaltung von der dritten Übersetzung "3" für Vorwärtsfahrt in Richtung der ersten Übersetzung "1" für Vorwärtsfahrt beteiligten Schaltelemente A, B, C und D sowie der Verlauf einer während der Mehrfachrückstellung sich einstellenden Motordrehzahl n_mot einer Brennkraftmaschine eines Fahrzeugs in stark schematisierter Darstellung gezeigt.

Der Verlauf des Ansteuerdrucks p_A des Schaltelementes A ist über den in Fig. 5 dargestellten Betriebszustandverlauf konstant und entspricht im Wesentlichen dem vollen Schaltdruck des Schaltelementes A , der gleich dem vom Systemdruckventil 4 anliegenden Systemdruck p_sys ist, da das Schaltelement A zur Darstellung aller an der Mehrfachschaltung beteiligten Übersetzungen "3", "2" und "1" vorgesehen ist.

Zu einem Zeitpunkt T-0 wird von der Getriebesteuereinrichtung ein Schaltsignal zur Rückschaltung ausgehend von der dritten Übersetzung "3" in Richtung der zweiten Übersetzung "2" ausgegeben und der Ansteuerdruck p_B des Schaltelementes B unterhalb des zweiten Druckschwellwertes p_B_schwell2 abgesenkt, so dass ein Zuschalten des zweiten Schaltelementes D zur Darstellung der Übersetzung "R" für Rückwärtsfahrt möglich ist. Wenigstens annähernd gleichzeitig wird der Ansteuerdruck p_C des Schaltelementes C, welches zur Darstellung der zweiten Übersetzung "2" in den Kraftfluss des Automatgetriebes zuzuschalten ist, ausgehend von seinem Öffnungsdruck p_C_o in Richtung seines Schnellfülldrucks p_C_sf angehobene und während einer Schnellfüllphase in an sich bekannter Art und Weise vorbefüllt. Am Ende der Schnellfüllphase des Schaltelementes C wird auch der Ansteuerdruck des Schaltelementes D von seinem Öffnungsdruck p_D_o auf seinen Schnellfülldruck p_D_sf angehoben und während einer Schnellfüllphase vorbefüllt.

Der Ansteuerdruck p_C des Schaltelementes C wird vorliegend zu Beginn der Schnellfüllphase des Schaltelementes D auf seinen Füllausgleichsdruck p_C_fa abgesenkt und am Ende der Füllausgleichsphase zum Zeitpunkt T_1 in Richtung des Systemdrucks p_sys angehoben, womit die Übertragungsfähigkeit des Schaltelementes C stetig zunimmt. Zu einem Zeitpunkt T_2 wird der Ansteuerdruck p_C auf einem konstanten Druckniveau gehalten und zu einem Zeitpunkt T_3 in Richtung seines Öffnungsdrucks p_C_o abgesenkt, da von der Getriebesteuereinrichtung ein weiteres Schaltsignal zum Einlegen der ersten Übersetzung "1" in dem Automatgetriebe vorliegt.

Wenigstens annähernd gleichzeitig mit der Absenkung des Ansteuerdrucks p_C wird der Ansteuerdruck p_D des Schaltelementes D vorliegend vor dem Zeitpunkt T_3 von seinem Füllausgleichsdruck p_D_fa in Richtung des Systemdruckes p_sys angehoben und die Übertragungsfähigkeit des Schaltelementes D derart eingestellt, dass die erste Übersetzung "1" für Vorwärtsfahrt eingelegt ist.

Der Ansteuerdruck p_B des Schaltelementes B unterschreitet zum Zeitpunkt T_1 bereits den Ansteuerdruck p_D bzw. den Füllausgleichsdruck p_D_fa des Schaltelementes D, so dass die Übertragungsfähigkeit des Schaltelementes B zum Zuschaltzeitpunkt des Schaltelementes D nahezu Nul ist und das Schaltelement B aus dem Kraftfluss des Automatgetriebes sicher abgeschaltet ist.

Bei einem Fehler in der Getriebesteuereinrichtung wird die getriebesteuereinrichtungsseitige Bestromung der Drucksteuerventile 5 und A1 bis E1 unterbrochen, so dass die Drucksteuerventile A1, C1, D1 und E1 geschlossen werden, während die Drucksteuerventile 5 und B1 vollständig geöffnet sind. Dies führt dazu, dass das Systemdruckventil 4 mit dem maximalen Vorsteuerdruck p_VS_5 des Drucksteuerventiles 5 beaufschlagt wird und der Systemdruck p_sys einen maximalen Wert annimmt. Gleichzeitig wird auch das dem Schaltelement B zugeordnete Druckregelventil B3 mit dem vollen Vorsteuerdruck p_VS_B des Drucksteuerventiles B1 beaufschlagt, so dass das Druckregelventil B3 umgeschaltet wird und das Schaltelement B mit seinem vollen Schaltdruck p_A, der in diesem Betriebszustand der elektrohydraulischen Steuervorrichtung 1 dem Systemdruck p_sys entspricht, beaufschlagt wird, und in Abhängigkeit des zum Zeitpunkt des Ausfalls der Getriebesteuereinrichtung vorherrschenden Betriebszustandes der elektrohydraulischen Getriebesteuervorrichtung in den Kraftfluss des Automatgetriebes zugeschaltet wird oder in diesem zugeschaltet bleibt.

Diese Notbetriebsstrategie beruht auf der Tatsache, dass aufgrund der vorbeschriebenen Schaltstrategie das Schaltelement B als so genanntes Notgangschaltelement vordefiniert ist, welches zur Darstellung verschiedener Notgangübersetzungen "3", "5", "R" jeweils in den Kraftfluss des Automatgetriebes zugeschaltet wird. Dabei ist jedem der drei Übersetzungsbereiche eine Notgangübersetzung zugeordnet, wobei die dem ersten Übersetzungsbereich zugeordnete Notgangübersetzung der dritten Vorwärtsfahrstufe bzw. der dritten Übersetzung "3", zu deren Darstellung das Schaltelement B und das Schaltelement A gleichzeitig in den Kraftfluss des Automatgetriebes zugeschaltet sind, entspricht.

Des Weiteren ist dem zweiten Übersetzungsbereich als Notgangübersetzung die fünfte Übersetzung "5" zugeordnet, zu deren Darstellung das Notgangschaltelement B und das Schaltelement E gleichzeitig in den Kraftfluss des Automatgetriebes zuzuschalten sind.

Fällt die elektrische Getriebesteuereinrichtung bei eingelegtem Rückwärtsgang aus, wird das Automatgetriebe im zum Zeitpunkt des Ausfalls der elektrischen Getriebesteuereinrichtung vorherrschenden Betriebszustand des Automatgetriebes belassen, wobei die zur Darstellung der Übersetzung "R" für Rückwärtsfahrt gleichzeitig in den Kraftfluss zuzuschaltende Schaltelemente B und D direkt vom Systemdruckventil 4 bzw. über den Wählschieber 2 mit dem Systemdruck p_sys beaufschlagt werden.

Bei aktiver Getriebesteuereinrichtung werden die Schaltelemente A bis E über die elektrisch von der Getriebesteuereinrichtung ansteuerbaren Drucksteuerventile A1 bis E1 angesteuert. Da die Drucksteuerventile A1 bis E1 bei deaktivierter bzw. inaktiver Getriebesteuereinrichtung nicht mehr elektrisch ansteuerbar sind, und die Schaltelemente A, C, D und E über ihre zugeordneten Drucksteuerventile A1, C1, D1, E1 nicht mehr mit dem für die Durchschaltung des anliegenden Systemsdrucks p_sys erforderlichen Vorsteuerdruck p_VS_A, p_VS_C, p_VS_D oder p_VS_E in dem für die Zuschaltung erforderlichen Umfang ansteuerbar sind, sind bei inaktiver Getriebesteuereinrichtung andere Ansteuerungen in Abhängigkeit des Ansteuerdrucks p_B des Schaltelementes bzw. des Notgangschaltelementes B und eines zum Zeitpunkt des Ausfalls der Getriebesteuereinrichtung vorliegenden Betriebszustandes des Automatgetriebes vorgesehen.

Zur Umsetzung eines hydraulischen Notkonzeptes sind die bei aktiver Getriebesteuereinrichtung im Wesentlichen nicht aktiv an der Steuerung des Automatgetriebes beteiligten Schaltventile SV_1 und SV_2 vorgesehen, wobei das Schaltventil SV_1 nachfolgend als Auswahlschaltventil und das Schaltventil SV_2 als Notgangschaltventil bezeichnet werden.

Das Notgangschaltventil SV_2 wird bei aktiver Getriebesteuereinrichtung im Bereich einer Stirnfläche seines Ventilschiebers 11 derart mit den Vorsteuerdrücken p_VS_A, p_VS_D und p_VS_E beaufschlagt, dass das Notgangschaltventil SV_2 über alle Betriebsbereiche des Automatgetriebes entgegen einer Federeinrichtung 12 in der in Fig. 1 dargestellten Position gehalten ist, die einer ersten Schaltstellung entspricht und in der eine Verbindungsleitung 13 zwischen einer Ansteuerleitung 14 des Notgangschaltelementes B und dem Auswahlschaltventil SV_1 im Bereich des Notgangschaltventiles SV_2 gesperrt ist.

Selbstverständlich liegt es im Ermessen des Fachmannes das Notgangschalventil SV_2 während des normalen Fahrbetriebs in Abhängigkeit eines anderen Drucksignals, wie beispielsweise des Vorsteuerdrucks p_VS_5 des Drucksteuerventiles 5, mittels dem der Systemdruck p_sys modulierbar ist, in der in Fig. 1 dargestellten Schaltstellung zu halten.

Bei inaktiver elektrischer Getriebesteuereinrichtung ist die Stirnfläche des Ventilschiebers 11 des Notgangschaltventiles SV_2 nicht mit den Vorsteuerdrücken p_YS_A, p_VS_D oder p_VS_E beaufschlagt, so dass der Ventilschieber 11 von der Federeinrichtung 12 aus der in Fig. 1 dargestellten Position in seine zweite Schaltstellung umgeschoben wird und die Verbindungsleitung 13 im Bereich des Notgangschaltventiles SV_2 entsperrt ist. Damit der Ansteuerdruck p_B, der bei inaktiver Getriebesteuereinrichtung im Wesentlichen dem System p_sys entspricht, in Richtung des Auswahlschaltventiles SV_1 weitergeleitet. Im Bereich des Auswahlschaltventiles SV_1 wird nun das jeweils zur Darstellung einer bestimmten Notgangübersetzung "3", "5", "R" zusätzlich zu dem Notgangschaltelement B zuzuschaltende weitere Schaltelement A, E, D in Abhängigkeit eines aktuellen Betriebszustandes des Automatgetriebes ausgewählt.

Das Auswahlschaltventil SV_1 befindet sich in der in Fig. 1 dargestellten Position in seiner durch den anliegenden Ansteuerdruck p_E des Schaltelementes E entgegen einer Federeinrichtung 15 umgeschalteten zweiten Schaltstellung, in der der bei inaktiver Getriebesteuereinrichtung über die Verbindungsleitung 13 anliegende Ansteuerdruck p_B des Notgangschaltelementes B auf einen Zusatzkolben 16 des Druckregelventiles E3 geführt wird. Dies führt dazu, dass der Zusatzschaltkolben 16 des Druckregelventiles E3 am Ventilschieber 17 des Druckregelventiles E3 zum Anliegen kommt und das Druckregelventil E3 derart umgeschaltet wird, dass der über eine Leitung 18 anliegende Systemdruck p_sys als Ansteuerdruck p_E in Richtung des Schaltelementes E geführt wird.

Dadurch, dass die Stirnseite eines Ventilschiebers 19 des Auswahlschaltventiles SV_1 mit dem Ansteuerdruck p_E des Schaltelementes E beaufschlagbar ist, befindet sich das Auswahlschaltventil SV_1 bei allen Übersetzungen "4", "5", "6" des zweiten Übersetzungsbereichs in der in Fig. 1 dargestellten zweiten Schaltstellung. Bei einem Ausfall der Getriebesteuereinrichtung wird der am Auswahlschaltventil SV_1 anliegende Ansteuerdruck p_B des Notgangschaltelements B über das Notgangschaltventil SV_2 dann auf das Druckregelventil E3 des Schaltelementes E geführt. Dies führt dazu, dass der über die Leitung 18 am Druckregelventil E3 anliegende Systemdruck p_sys dem Schaltelement E als Ansteuerdruck p_E zugeführt wird und das Schaltelement E neben dem Notgangschaltelement B zur Darstellung der dem zweiten Übersetzungsbereich zugeordneten Notgangübersetzung "5" in den Kraftfluss des Automatgetriebes zugeschaltet ist.

Dabei stellt der Steuerkreis des Schaltelementes E einen so genannten hydraulischen Merkspeicher dar, da der Steuerkreis des Schaltelementes E in Bezug auf den Ansteuerdruck p_E mit einer derartigen Trägheit ausgebildet ist, dass der Ansteuerdruck p_E des Schaltelementes E bei einem Ausfall der Getriebesteuereinrichtung bei einem Betriebszustand des Automatgetriebes, in dem in dem Getriebe eine der Übersetzungen "4" bis "6", die dem zweiten Übersetzungsbereich zugeordnet sind, eingelegt ist, so lange oberhalb eines Druckwertes liegt, der das Auswahlschaltventil SV_1 der in Fig. 1 dargestellten Position hält und in dem Getriebe bei einem Ausfall der Getriebesteuereinrichtung die dem zweiten Übersetzungsbereich zugeordnete Notgangübersetzung "5" eingelegt wird.

Fällt die elektrische Getriebesteuereinrichtung in einem Betriebszustand des Automatgetriebes aus, in dem eine der Übersetzungen "1" bis "3" des ersten Übersetzungsbereiches im Automatgetriebe eingelegt ist, befindet sich das Auswahlschaltventil SV_1 in seiner ersten Schaltstellung, in der der Ventilschieber 19 des Auswahlschaltventiles SV_1 mit seiner vom Ansteuerdruck p_E beaufschlagbaren Stirnfläche vollständig am Gehäuse des Auswahlschaltventiles SV_1 anliegt. Dann wird der bei inaktiver Getriebesteuereinrichtung über die Verbindungsleitung 13 und das Notgangschaltventil SV_2 durchgeschaltete Ansteuerdruck p_B des Notgangschaltelementes B auf das Druckregelventil A3 des Schaltelementes A geführt. Dabei wird ein Zusatzschaltkolbein 20 des Druckregelventiles A3 auf einer einem Ventilschieber 21 abgewandten Stirnseite mit dem Ansteuerdruck p_B des Notgangschaltelementes B beaufschlagt und derart umgeschaltet, dass das Schaltelement A über die Leitung 18 mit dem Systemdruck p_sys als Ansteuerdruck p_A beaufschlagt wird und gemeinsam mit dem Schaltelement B zur Darstellung der dem ersten Übersetzungsbereich zugeordneten Notgangübersetzung "3" in den Kraftftuss des Automatgetriebes zugeschaltet ist.

Die Ausgestaltung der Druckregelventile A3 und E3 mit den Zusatzschaltkolben 16 bzw. 20 ermöglicht es, dass die Wechselwirkungen auf die Funktionsweise der Druckregelventile im normalen Betrieb der elektrohydraulischen Getriebesteuervorrichtung 1, bei dem die Getriebesteuereinrichtung aktiv ist, so gering wie möglich sind. Die Zusatzschaltkolben 16 und 20 der Druckregelventile E3 und A3 übernehmen lediglich bei inaktiver Getriebesteuereinrichtung die Steuerfunktion der Drucksteuerventile A1 bzw. E1, da bei inaktiver Getriebesteuereinrichtung deren Steuersignale ausfallen.

Der Ventilschieber 21 und der Zusatzschaltkolben 20 des Druckregelventiles A3 sowie der Zusatzschaltkolben 16 und der Ventilschieber 17 des Druckregelventiles E3 begrenzen jeweils einen Steuerraum 22 bzw. 23, die jeweils mit dem Vorsteuerdruck p_VS_A bzw. p_VS_E des jeweils korrespondierenden Schaltelementes A bzw. E beaufschlagbar sind, wobei jeweils auf der dem Steuerraum 22 bzw. 23 abgewandten Seite des zugehörigen Zusatzschaltkolbens 20 bzw. 16 ein weiterer Steuerraum 24 bzw. 25 vorgesehen ist, die bei inaktiver Getriebesteuereinrichtung mit dem Ansteuerdruck p_B des Notgangschaltelementes B in der vorbeschriebenen Art und Weise zur Notansteuerung der Schaltelementes A und E beaufschlagt werden.

Selbstverständlich liegt es im Ermessen des Fachmannes, das Druckregelventil A3 und/oder das Druckregelventil E3 im Notschaltbetrieb anstatt mit dem Ansteuerdruck p_B des Notgangschaltelementes B mit dem Vorsteuerdruck p_VS_B des Notgangschaltelementes B zu beaufschlagen und in der vorbeschriebenen Art und Weise bedarfsweise in den Kraftfluss des Getriebes zuzuschalten.

Bei den in der Zeichnung dargestellten elektrohydraulischen Steuervorrichtungen 1 ist in das Notgangschaltkonzept ein dritter Übersetzungsbereich mit einer weiteren Notgangübersetzung mit einbezogen, wobei der dritte Übersetzungsbereich die Übersetzung "R" für Rückwärtsfahrt umfasst und die dem dritten Übersetzungsbereich zugeordnete Notgangübersetzung "R" dem Rückwärtsgang entspricht, bei dem im Getriebe das Schaltelement B und das Schaltelement D gleichzeitig in den Kraftfluss des Automatgetriebes zugeschaltet sind, während die anderen Schaltelemente A, C und E derart abgeschaltet sind, dass über diese im Wesentlichen kein Drehmoment führbar ist.

Die Übersetzung "R" für Rückwärtsfahrt wird somit durch gleichzeitiges Zuschalten des als erstes Rückwärtsfahrtschaltelement fungierendes Notgangschaltelementes B und das nachfolgend als zweites Rückwärtsfahrtschaltelement bezeichnete Schaltelement D dargestellt, wobei das Notgangschaltelement B und das zweite Rückwärtsfahrtschaltelement D bei aktiver Getriebesteuereinrichtung über die jeweils damit korrespondierenden Drucksteuerventile B1 und D1 bzw. über diese eingestellten Vorsteuerdrücke p_VS_B bzw. p_VS_E zuschaltbar sind.

Bei inaktiver Getriebesteuereinrichtung ist das dem Rückwärtsfahrtschaltelement D zugeordnete Drucksteuerventil D1 geschlossen, womit der über das Drucksteuerventil D1 einstellbare Vorsteuerdruck p_VS_D wenigstens annähernd Null ist. Aus diesem Grund wird das Rückwärtsfahrtschaltelement D bei inaktiver Getriebesteuereinrichtung zur Darstellung der dem dritten Übersetzungsbereich zugeordneten Notgangübersetzung "R" über ein vom Wählschieber 2 im Bereich des Notgangschaltelementes SV_2 durchgeschaltetes Drucksignal im Bereich der Schaltventile D2A, D2B und der Druckregelventile D3A, D3B angesteuert, wenn der Wählschieber 2 in eine für Rückwärtsfahrt äquivalente Position "Pos P" umgelegt ist. Dann wird der vom Systemdruckventil 4 über das Schaltventil SV_3 an den Druckregelventilen D3A, D3B anliegende Systemdruck p_sys in Richtung des Schaltelementes D weitergeleitet.

Das Notgangschaltelement B wird in der vorbeschriebenen Art und Weise über das stromlos offene Drucksteuerventil B1 angesteuert und über das Druckregelventil B3 mit dem für die Zuschaltung erforderlichen Ansteuerdruck p_B, der im Wesentlichen dem Systemdruck p_sys entspricht, angesteuert. Die Schaltelemente A und E werden zwar in der vorbeschriebenen Art und Weise in Abhängigkeit der Schaltstellung des Auswahlschaltventiles SV_1 angesteuert, jedoch liegt der Systemdruck p_sys bei der Wählhebelposition "Pos P" an diesen Schaltelementen nicht an, weshalb ein Zuschalten der Schaltelemente A und E unterbleibt.

Das Notgangschaltventil SV_2 wird bei aktiver Getriebesteuereinrichtung und bei eingelegter Übersetzung "R" für Rückwärtsfahrt in Abhängigkeit des Vorsteuerdrucks p_VS_D des Rückwärtsfahrtschaltelementes D oder alternativ hierzu in Abhängigkeit eines vom Wählhebel 2 ausgehenden Drucksignales in seiner ersten Schaltstellung, in der die Verbindungsleitung 13 im Bereich des Notgangschaltventiles SV_2 gesperrt ist, gehalten.

Das vorbeschriebene und mit den elektrohydraulischen Steuervorrichtungen 1 gemäß Fig. 1 bis Fig. 3 durchführbare Notschaltkonzept für den Übersetzungsbereich für Vorwärtsfahrt und den Übersetzungsbereich für Rückwärtsfahrt bietet den Vorteil, dass die Schaltelemente A und E, welche zur Darstellung der Notgangübersetzungen "3" und "5" der beiden Übersetzungsbereiche für Vorwärtsfahrt jeweils in Kombination mit dem Notgangschaltelement B in den Kraftfluss zugeschaltet werden, bei inaktiver Getriebesteuereinrichtung nur bei einer einer Vorwärtsfahrt äquivalenten Stellung des Wählhebels 2 mit dem für die Zuschaltung erforderlichen Ansteuerdruck p_A bzw. p_E beaufschlagt werden und das Rückwärtsfahrtschaltelement D, welches zur Darstellung der dem dritten Übersetzungsbereich zugeordneten Notgangübersetzung "R" in Kombination mit dem Notgangschaltelement B in den Kraftfluss zugeschaltet ist, nur bei einer Rückwärtsfahrt äquivalenten Position des Wählschiebers 2 mit dem für die Zuschaltung erforderlichen Ansteuerdruck p_D beaufschlagt wird. Damit ist eine Fehlansteuerung der Schaltelemente A, B, D und E sowohl im Normalbetrieb als auch im Notschaltbetrieb der elektrohydraulischen Steuervorrichtung 1 gemäß Fig. 1 bis Fig. 3 wirkungsvoll und auf einfache und kostengünstige Art und Weise vermieden.

Grundsätzlich ist bei den in der Zeichnung dargestellten Ausführungsbeispielen der Steuervorrichtung 1 ein Wechsel von der Notgangübersetzung "5" des zweiten Übersetzungsbereiches, der die Übersetzungen "4" bis "6" umfasst, die zur Umsetzung höherer Fahrzeuggeschwindigkeiten vorgesehen sind, in die dem ersten Übersetzungsbereich zugeordnete Notgangübersetzung "3", der wiederum die Übersetzungen "1" bis "3" umfasst, die bei geringerben Fahrzeuggeschwindigkeiten eingelegt sind, nur durch ein Umschalten des Auswahlschaltventiles SV_1 von seiner zweiten Schaltstellung in seine erste Schaltstellung möglich.

Ein Umschalten des Auswahlschaltventiles SV_1 ist grundsätzlich dann möglich, wenn das am Auswahlschaltventil SV_1 anliegende Drucksignal des Schaltelementes E derart abgesenkt wird, dass das Auswahlschaltventil SV_1 umschaltet und der Ansteuerdruck p_B des Schaltelementes B vom Auswahlschaltventil SV_1 anstatt zum Druckregelventil E3 des Schaltelementes E in Richtung des Druckregelventiles A3 des Schaltelementes A geführt wird, was letztendlich zu einer Beaufschlagung des Schaltelementes A mit dem für die Zuschaltung des Schaltelementes A erforderlichen Ansteuerdrucks p_A führt.

Die Unterbrechung des am Auswahlschaltventil SV_1 anliegenden Drucksignals ist beispielsweise durch ein Abschalten des Motors des Fahrzeugs oder durch ein kurzzeitiges Umlegen des Wählschiebers 2 in die Neutralposition "Pos N" bewerkstelligbar, wobei das Auswahlschaltventil SV_1 bei Ausbleiben des Drucksignals durch seine Federeinrichtung 15 umgeschaltet wird.

Darüber hinaus besteht jedoch auch die Möglichkeit, dass das Auswahlschaltventil SV_1 bei einer nicht näher dargestellten weiteren vorteilhaften Ausführungsform mit einer hydraulischen oder mechanischen Selbsthaltung ausgebildet ist, die aktiv über den Wählschieber 2 durch Umlegen des Wählschiebers in die Position "Pos R" für Rückwärtsfahrt, was einen Übergang in die Notübersetzung "R" für Rückwärtsfahrt zur Folge hat, zurückgesetzt wird und sich nach dem Umschieben des Auswahlschaltventiles SV_1 in seine Ausgangslage bei entsprechender Wählhebelposition des Wählschiebers 2 die niedrigere Notgangübersetzung "3" im Automatgetriebe einstellt.

Die Zusatzschaltkolben 16 und 20 der Druckregelventile E3 und A3 sind bei allen in der Zeichnung dargestellten Ausführungsbeispielelen der Steuervorrichtung gestuft ausführbar, um über die Variation der Durchmesser der Zusatzschaltkolben 16 und 20 den an den jeweils zuschalteten Schaltelementen A oder E jeweils anliegenden Ansteuerdruck an die entsprechende Notgangübersetzung "3" bzw. "5" anpassen zu können. Dies ist erforderlich, um die Bauteilbelastungen der Schaltelemente A bzw. E im Notgangbetrieb der elektrohydraulischen Getriebesteuervorrichtung 1 so gering wie möglich zu halten und die Zuschaltung der Notgangübersetzungen "3" bzw. "5" durch eine entsprechende Schlupfphase der Schaltelemente A bzw. E während der Zuschaltphase entsprechend weich zu gestalten. Diese Vorgehensweise resultiert aus der Kenntnis, dass aufgrund der während der Notschaltung wirkenden dynamischen Kräfte, die beispielsweise durch die Veränderung der Übersetzung im Getriebe verursachten Drehzahländerungen bewirkt werden, Bauteile des Automatgetriebes in unzulässiger Weise belastet werden können.

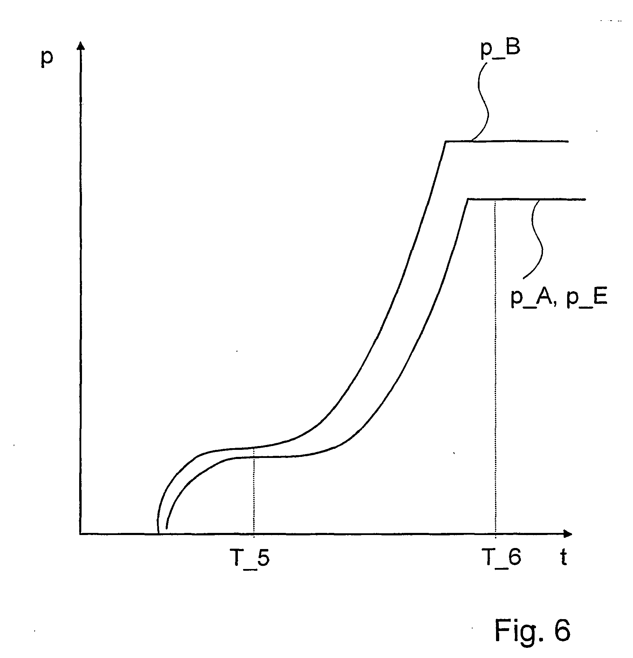

In Fig. 6 ist der Verlauf des Ansteuerdrucks p_B des Notgangschaltelementes B im Vergleich zu den Verläufen der Ansteuerdrücke p_A und p_E der Schaltelemente A und E bei inaktiver Getriebesteuereinrichtung dargestellt. Anhand des graphischen Vergleichs der Schaltdrücke p_A, p_B, p_E der Schaltelemente A, B und E ist ersichtlich, dass das Notgangschaltelement B am Ende seiner Zuschaltung mit dem vollen Systemdruck p_sys beaufschlagt wird. Die Schaltelemente A bzw. E werden in zugeschaltetem Zustand jeweils mit einem gegenüber dem Systemdruck p_sys reduzierten Schaltdruck beaufschlagt, der sich aus dem an dem Zusatzschaltkolben 16 bzw. 20 eingestellten Flächenverhältnis ergibt. Diese einfache konstruktive Maßnahme bietet den Vorteil, dass die Schaltelemente A und E zu dem in Fig. 6 dargestellten Zeitpunkt T_5 zunächst in einen Schlupfbetrieb übergehen, der zu einem Zeitpunkt T_6 endet. Dieser im Vergleich zum normalen Fahrbetrieb lange Schlupfbetrieb der Schaltelemente A und E führt zu einem harmonischen und belastungsarmen Zuschalten der Schaltelemente A und E, wodurch eine Beschädigung von Bauteilen des Automatgetriebes auf einfache Art und Weise vermieden werden kann.

### Bezugszeichen

- 1: elektrohydraulische Getriebesteuervorrichtung 2
- 1A: hydraulisches Steuersystem
- 2: Wählschieber
- 3: Hydraulikpumpe
- 4: Systemdruckventil
- 5: Drucksteuerventil
- 6: Reduzierventil
- 7: Oderventil
- 8: Oderventil
- 9: Druckbegrenzungsventil
- 10: Ölsumpf
- 11: Ventilschieber des Notgangschaltventiles
- 12: Federeinrichtung des Notgangschaltventiles
- 13: Verbindungsleitung
- 14: Ansteuerleitung
- 15: Federeinrichtung des Auswahlschaltventiles
- 16: Zusatzschaltkolben des Druckregelventiles E3
- 17: Ventilschieber des Druckregelventiles E3
- 18: Leitung
- 19: Ventilschieber des Auswahlschaltventiles
- 20: Zusatzschaltkolben des Druckregelventiles A3
- 21: Ventilschieber des Druckregelventiles A3
- 22: Steuerraum des Druckregelventiles A3
- 23: Steuerraum des Druckregelventiles E3
- 24: weiterer Steuerraum des Druckregelventiles A3
- 25: weiterer Steuerraum des Druckregelventiles E3
- 26: Federeinrichtung des Zuschaltverhinderungsventiles SV_3
- 27: Druckversorgungsleitung
- 28: Ventilschieber des Zuschaltverhinderungsventiles SV_3
- 29: Steuerraum des Zuschaltverhinderungsventiles SV_3
- 30: Oderventil
- 31: Vorsteuerdruckleitung
- 32: Vorsteuerdruckleitung

- A: Schaltelement
- A1, B1, C1, D1, E1: Drucksteuerventil
- A2, D2A, D2B, E2: Schaltventil
- A3, B3, C3, D3A, D3B, E3: Druckregelventil
- B: Schaltelement, Notgangschaltelement, erstes Rückwärtsfahrtschaltelement
- C: Schaltelement
- D: Schaltelement, zweites Rückwärtsfahrtschaltelement
- E: Schaltelement
- p_red: Steuerdruck
- p_VS_A bis p_VS_E: Vorsteuerdruck
- p_A bis p_E: Ansteuerdruck
- p_sys: Systemdruck
- "1" " bis"6": Übersetzung für Vorwärtsfahrt
- "R": Übersetzung für Rückwärtsfahrt
- "Pos D", "Pos N",: Wählhebelposition
- "Pos R", "Pos P": Wählhebelposition
- p_B_schwell 1: erster Druckschwellwert
- p_B_schwell2: zweiter Druckschwellwert
- SV_1: Auswahlschaltventil
- SV_2: Notgangschaltventil
- SV_3: Schaltventil, Zuschaltverhinderungsventil

## Patentansprüche

1. Steuervorrichtung (1) für ein Getriebe, insbesondere für ein Automatgetriebe eines Fahrzeugs, mit einem über eine elektrische Getriebesteuereinrichtung ansteuerbaren hydraulischen Steuersystem, das mehrere von der Getriebesteuereinrichtung elektrisch ansteuerbare Drucksteuerventile (5, A1, B1, C1, D1, E1) und mehrere jeweils von einem von den Drucksteuerventilen (5, A1 bis E1) einstellbaren hydraulischen Vorsteuerdruck (p_VS_5, p_VS_A, p_VS_B, p_VS_C, p_VS_D, p_VS_E) ansteuerbare Schaltventile (A2, D2A, D2B, E2, SV_1, SV_2, SV_3) und Druckregelventile (A3, B3, C3, D3A, D3B, E3) umfasse wobei über das hydraulische Steuersystem in Abhängigkeit einer Wählhebelposition ("Pos D", "Pos R", "Pos N", "Pos P") eines manuellen Wählschiebers (2) mehrere Schaltelemente (A, B, C, D, E) derart mit einem hydraulischen Ansteuerdruck (p_A, p_B, p_C, p_D, p_E) ansteuerbar sind, dass durch jeweils zwei gleichzeitig in den Kraftfluss des Getriebes zugeschaltete Schaltelemente (A, D; A, C; A, B; A, E; B, E; C, E; B, D) verschiedene Übersetzungen ("1" "2", "3", "4", "5", "6" "R") des Getriebes für Vorwärtsfahrt oder für Rückwärtsfahrt einstellbar sind; wobei die Übersetzung ("R") für Rückwärtsfahrt über zwei gleichzeitig zugeschaltete Schaltelemente (B, D) darstellbar ist, wobei jeweils eines dieser beiden Schaltelemente (B, D) jeweils in Kombination mit jeweils einem weiteren der Schaltelemente (A, E) zur Darstellung jeweils wenigstens einer Übersetzung ("1", "3", "5") für Vorwärtsfahrt vorgesehen ist; wobei jedem der Schaltelemente (A bis E) ein separates Drucksteuerventil (A1 bis E1) zugeordnet ist und wobei ein Zuschaltverhinderungsventil (SV_3) vorgesehen ist, **dadurch gekennzeichnet, dass** das Zuschalt verhinderungsventil (SV_3) in Richtung einer ersten Schaltstellung entgegen einer Federeinrichtung (26) mit einem Ansteuerdruck (p_B) des ersten Schaltelementes (B) zur Darstellung der Übersetzung ("R") für Rückwärtsfahrt beaufschlagbar ist und das in Richtung einer zweiten Schaltstellung mit einem dem Ansteuerdruck (p_B) des ersten Schaltelementes (B) zur Darstellung der Übersetzung ("R) für Rückwärtsfahrt äquivalenten Drucksignal (p_sys) ansteuerbar ist, wobei eine Druckversorgungsleitung (27; 32) des zweiten Schaltelementes (D) zur Darstellung der Übersetzung ("R") für Rückwärtsfahrt in der ersten Schaltstellung des Zuschaltverhinderungsventiles (SV_3) gesperrt ist und in der zweiten Schaltstellung des Zuschaltverhinderungsventiles (SV_3) freigegeben ist.

2. Steuervorrichtung nach Anspruch 1, **dadurch gekennzeichnet, dass** über die Druckversorgungsleitung (27) ein für die Zuschaltung des zur Darstellung der Übersetzung ("R") für Rückwärtsfahrt vorgesehenen zweiten Schaltelementes (D) erforderlicher Ansteuerdruck (p_D) zur Verfügung gestellt wird.

3. Steuervorrichtung nach Anspruch 1, **dadurch gekennzeichnet, dass** über die als Vorsteuerdruckleitung ausgeführte Druckversorgungsleitung (32) ein Vorsteuerdruck (p_VS_D) für die Ansteuerung des dem zur Darstellung der Übersetzung ("R") für Rückwärtsfahrt vorgesehenen zweiten Schaltelementes (D) zugeordneten Druckregelventiles (D3A, D3B) und/oder des dem zweiten Schaltelement (D) zugeordneten Schaltventiles (D2A, D2B) zur Verfügung gestellt wird.

4. Steuervorrichtung nach einem der Ansprüche 1 bis 3, **dadurch gekennzeichnet, dass** das Drucksignal (p_sys) wenigstens annähernd einem über ein Systemdruckventil (4) eingestellten Systemdruck (p_sys) entspricht.

5. Steuervorrichtung nach einem der Ansprüche 1 bis 4, **dadurch gekennzeichnet, dass** das Drucksignal (p_sys) wenigstens bei der Wählhebelposition ("Pos R") für Rückwärtsfahrt über den Wählschieber (2) zu dem Zuschaltverhinderungsventil (SV_3) führbar ist.

6. Steuervorrichtung nach einem der Ansprüche 1 bis 5, **dadurch gekennzeichnet, dass** das Drucksteuerventil (B1) des ersten Schaltelementes (B) zur Darstellung der Übersetzung ("R") für Rückwärtsfahrt bei inaktiver Getriebesteuereinrichtung geöffnet ist und das Druckregelventil (B3) dieses ersten Rückwärtsfahrtschaltelementes (B) mit dem für die Zuschaltung erforderlichen Vorsteuerdruck (p_VS_B) beaufschlagt wird.

7. Steuervorrichtung nach einem der Ansprüche 1 bis 6, **dadurch gekennzeichnet, dass** das Drucksteuerventil (D1) des zweiten Schaltelementes (D) zur Darstellung der Übersetzung ("R") für Rückwärtsfahrt bei inaktiver Getriebesteuereinrichtung geschlossen ist und dass eine Ansteuerung des Druckregelventiles (D3A, D3B) und des Schaltventiles (D2A, D2B) dieses zweiten Rückwärtsfahrtschaltelementes (D) mit dem über das Drucksteuerventil (D1) einstellbaren Vorsteuerdruck (p_VS_D) unterbleibt.

8. Steuervorrichtung nach einem der Ansprüche 1 bis 7, **dadurch gekennzeichnet, dass** das Druckregelventil (D3A, D3B) und das Schaltventil (D2A, D2B) des zweiten Rückwärtsfahrtschaltelementes (D) bei inaktiver Getriebesteuereinrichtung über den vom Wählschieber (2) in einer Wählhebelposition "keine Vorwärtsfahrt", insbesondere in der Wählhebelposition ("Pos R") für Rückwärtsfahrt, am Druckregelventil (D3A, D3B) und am Schaltventil (D2A, D2B) anliegenden Systemdruck (p_sys) derart ansteuerbar sind, dass an dem zweiten Rückwärtsfahrtschaltelement (D) der für dessen Zuschaltung erforderliche Ansteuerdruck (p_D) anliegt.

9. Steuervorrichtung nach einem der Ansprüche 1 bis 8, **dadurch gekennzeichnet, dass** der bei inaktiver Getriebesteuereinrichtung zur Ansteuerung des Druckregelventiles (D3A, D3B) und zur Ansteuerung des Schaltventiles (D2A, D2B) des zweiten Rückwärtsfahrtschaltelementes (D) vorgesehene Systemdruck (p_sys) über ein Notgangschaltventil (SV_2) zu dem Druckregelventil (D3A, D3B) und zu dem Schaltventil (D2A, D2B) führbar ist, wobei die Verbindung zwischen dem Wählschieber (2) und dem Druckregelventil (D3A, D3B) sowie zwischen dem Wählschieber (2) und dem Schaltventil (D2A, D2B) bei aktiver Getriebesteuereinrichtung im Bereich des Notgangschaltventiles (SV_2) gesperrt ist.

10. Steuervorrichtung nach einem der Ansprüche 1 bis 9, **dadurch gekennzeichnet, dass** das Zuschaltverhinderungsventil (SV_3) zum Variieren einer Ventilcharakteristik bei aktiver Getriebesteuereinrichtung zusätzlich in Richtung seiner zweiten Schaltstellung mit einem weiteren Drucksignal (p_VS_A) beaufschlagbar ist.

11. Steuervorrichtung nach Anspruch 10, **dadurch gekennzeichnet, dass** das weitere Drucksignal (p_VS_A) einem von einem in unbestromten Zustand geschlossenen Drucksteuerventil (A1) steuerbaren Vorsteuerdruck (p_VS_A) entspricht.

12. Steuervorrichtung nach Anspruch 10 oder 11, **dadurch gekenn** - **zeichnet,** dass das weitere Drucksignal und das Drucksignal auf separate Wirkflächen eines Ventilschiebers des Zuschaltverhinderungsventiles geführt werden.

13. Steuervorrichtung nach Anspruch 10 oder 11, **dadurch gekennzeichnet, dass** das weitere Drucksignal (p_VS_A) auf dieselbe Wirkfläche eines Ventilschiebers (28) des Zuschaltverhinderungsventiles (SV_3) wie das Drucksignal (p_sys) geführt wird, wobei das Drucksignal (p_sys) und das weitere Drucksignal (p_VS_A) wechselweise über ein Oderventil (30) auf die Wirkfläche führbar sind.

## Claims

1. Control device (1) for a transmission, especially for an automatic transmission of a vehicle with an ETC-controllable hydraulic control system comprising several ETC-controllable pressure control valves (5, A1, B1, C1, D1, E1) and several gear control valves (A2, D2A, D2B, E2, SV_1, SV_2, SV_3) and pressure-regulating valves (A3, B3, C3, D3A, D3B, E3) controllable by a hydraulic precontrol pressure (p_VS_5, p_VS_A, p_VS_B, p_VS_C, p_VS_D, p_VS_E) in each case settable by the pressure control valves (5, A1 thru E1); with several shifting components (A, B, C, D, E) being controllable by a hydraulic control pressure (p_A, p_B, p_C, p_D, p_E) via the hydraulic control system and dependent on a selector-lever position (Pos D, Pos R, Pos N, Pos P) of a manual selector valve (2) in such a manner that by means of two shifting components (A, D; A, C; A, B; A, E; B, E; C, E; B, D) in each case simultaneously engaged in the power flow of the transmission, various ratios (1, 2, 3, 4, 5, 6, R) of the transmission for forward driving or for rearward driving can be set; with the ratio (R) for rearward driving being realizable via two simultaneously engaged shifting components (B, D); with in each case one of these two shifting components (B, D) being provided in combination with in each case another one of the shifting components (A, E) for realization in each case of at least one ratio (1, 3, 5) for forward driving; with each of the shifting components (A thru E) having a separate pressure control valve (A1 thru E1) assigned to it, and with a sequence prevention valve (SV_3) being provided, **characterized in that** the sequence prevention valve (SV_3) can be acted on in the direction of a first shift position against a spring element (26) with a control pressure (p_B) of the first shifting component (B) for realization of the ratio (R) for rearward driving, and that the sequence prevention valve (SV_3) can be acted on in the direction of a second shift position with a pressure signal (p_sys) equivalent to the control pressure (p_B) of the first shifting component (B) for realization of the ratio (R) for rearward driving, with a pressure feed line (27, 32) of the second shifting component (D) for realization of the ratio (R) for rearward driving being blocked in the first shift position of the sequence prevention valve (SV_3) and being open in the second shift position of the sequence prevention valve (SV_3).

2. Control device according to claim 1, **characterized in that** the control pressure (p_D) required for activation of the second shifting component (D) intended for realization of the ratio (R) for rearward driving is provided via the pressure feed line (27).

3. Control device according to claim 1, **characterized in that** a precontrol pressure (p_VS_D) is provided via the precontrol-pressure-type pressure feed line (32) for control of the pressure-regulating valve (D3A, D3B) assigned to the second shifting component intended for realization of the ratio (R) for rearward driving, and/or for control of the gear control valve (D2A, D2B) assigned to the second shifting component (D).

4. Control device according to one of the claims 1 thru 3, **characterized in that** the pressure signal (p_sys) is at least approximately equivalent to a system pressure (p_sys) set by a system pressure valve (4).

5. Control device according to one of the claims 1 thru 4, **characterized in that** the pressure signal (p_sys) can be fed to the sequence prevention valve (SV_3) via the selector valve (2) at least in the selector lever position (Pos R) for rearward driving.

6. Control device according to one of the claims 1 thru 5, **characterized in that** the pressure control valve (B1) of the first shifting component (B) for realization of the ratio (R) for rearward driving is open if the TCU is not active, and that the pressure control valve (B3) of this first rearward-driving shifting component (B) is actuated with the precontrol pressure (p_VS_B) required for activation.

7. Control device according to one of the claims 1 thru 6, **characterized in that** the pressure control valve (D1) of the second shifting component (D) for realization of the ratio (R) for rearward driving is closed if the TCU is not active, and that actuation of the pressure-regulating valve (D3A, D3B) and the gear control valve (D2A, D2B) of this second rearward-driving shifting component (D) with the precontrol pressure (p_VS_D) settable by the pressure control valve (D1) does not take place.

8. Control device according to one of the claims 1 thru 7, **characterized in that** with inactive TCU, the pressure-regulating valve (D3A, D3B) and the gear control valve (D2A, D2B) of the second rearward-driving shifting component (D) are controllable by the system pressure (p_sys) acting via the selector valve (2) in a selector lever postion "no forward driving", especially in the selector lever position (PosR) for rearward driving, on the pressure-regulating valve (D3A, D3B) and on the gear control valve (D2A, D2B) in such a manner that the control pressure (p_D) required for activation of the second rearward-driving shifting component (D) acts on it.

9. Control device according to one of the claims 1 thru 8, **characterized in that** the system pressure (p_sys) provided with inactive TCU for control of the pressure-regulating valve (D3A, D3B) and for control of the gear control valve (D2A, D2B) of the second rearward-driving shifting component (D) can be fed via an emergency shift valve (SV 2) to the pressure-regulating valve (D3A, D3B) and to the gear control valve (D2A, D2B), with the connection between the selector valve (2) and the pressure-regulating valve (D3A, D3B) as well as between the selector valve (2) and the gear control valve (D2A, D2B) being blocked in the area of the emergency shift valve (SV_2) if the TCU is active.

10. Control device according to one of the claims 1 thru 9, **characterized in that** with active TCU, the sequence prevention valve (SV_3) can be activated by an additional pressure signal (p_VS_A) also in the direction of its second shift position for valve characteristic variation.

11. Control device according to claim 10, **characterized in that** the additional pressure signal (p_VS_A) is equivalent to a precontrol pressure (p_VS_A) controllable by a pressure control valve (A1) which in the deenergized condition is closed.

12. Control device according to claim 10 or 11, **characterized in that** the additional pressure signal and the pressure signal act on separate effective areas of a slide valve of the sequence prevention valve.

13. Control device according to claim 10 or 11, **characterized in that** the additional pressure signal (p_VS_A) acts on the same effective surface of a slide valve (28) of the sequence prevention valve (SV_3) as the pressure signal (p_sys), with the possibility of the pressure signal (p_sys) and the additional pressure signal (p_VS_A) acting alternately on the effective surface via an OR valve (30).

## Revendications

1. Dispositif de commande (1) pour une boîte de vitesses, notamment une boîte de vitesses automatique d'un véhicule, doté d'un système de commande hydraulique qui peut être piloté par un dispositif de commande électrique de la boîte de vitesses, ce système de commande hydraulique comprenant plusieurs soupapes de commande de pression (5, A1, B1, C1, D1, E1) qui peuvent être pilotées par voie électrique par le dispositif de commande de la boîte de vitesses, et plusieurs soupapes de commande (A2, D2A, D2B, E2, SV_1, SV_2, SV_3) et soupapes de régulation de la pression (A3, B3, C3, D3A, D3B, E3) qui peuvent être pilotées par une pression pilote hydraulique (p_VS_5, p_VS_A, p_VS_B, p_VS_C, p_VS_D, p_VS_E) réglable respectivement par les soupapes de commande de pression (5, A1 à E1) ; sachant qu'il est possible de piloter avec une pression de commande hydraulique (p_A, p_B, p_C, p_D, p_E) et par l'intermédiaire du système de commande hydraulique en fonction d'une position de commande ("Pos D", "Pos R", "Pos N", "Pos P") d'un coulisseau de sélection manuel (2) plusieurs éléments de commande (A, B, C, D, E) de manière à ce qu'il sera possible de régler par respectivement deux éléments de commande enclenchés simultanément dans la chaîne cinématique de la boîte de vitesses (A, D; A, C; A, B; A, E; B, E; C, E; B, D) différents rapports de démultiplication ("1", "2", "3", "4", "5", "6", "R") de la boîte de vitesses pour la marche avant ou la marche arrière; sachant que le rapport de démultiplication ("R") pour la marche arrière peut être réalisé par deux éléments de commande (B, D) enclenchés simultanément, sachant que respectivement un de ces deux éléments de commande (B, D) est prévu respectivement en combinaison avec respectivement un autre des éléments de commande (A, E) pour la réalisation respectivement d'au moins un rapport de démultiplication ("1", "3", "5") pour la marche avant; sachant que à chacun des éléments de commande (A à E) est associé une soupape de commande de pression séparée (A1 à E1) et sachant qu'il est prévue une soupape anti-enclenchement (SV_3), **caractérisé en ce que** la soupape anti-enclenchement (SV_3) peut être pressurisée dans la direction d'une première position de commutation opposée à une unité de ressort (26) avec une pression de commande (p_B) du premier élément de commande (B) pour réaliser le rapport de démultiplication ("R") pour la marche arrière et **en ce qu'**elle peut être pilotée dans la direction d'une deuxième position de commutation au moyen d'un signal de pression (p_sys) équivalent à la pression de commande (p_B) du premier élément de commande (B) pour réaliser le rapport de démultiplication ("R") pour la marche arrière, sachant qu'une conduite d'alimentation en pression (27; 32) du deuxième élément de commande (D) pour la réalisation du rapport de démultiplication ("R") pour la marche arrière est verrouillée dans la première position de commutation de la soupape anti-enclenchement (SV_3) et est libérée dans la deuxième position de commutation de la soupape anti-enclenchement (SV_3).

2. Dispositif de commande selon la revendication 1, **caractérisé en ce que** par l'intermédiaire de la conduite d'alimentation en pression (27) est mise à disposition une pression de commande (p_D) nécessaire pour l'enclenchement du deuxième élément de commande (D) prévu pour la réalisation du rapport de démultiplication ("R") pour la marche arrière.

3. Dispositif de commande selon la revendication 1, **caractérisé en ce que** par l'intermédiaire de la conduite d'alimentation en pression (32) réalisée comme conduite de pression pilote est mise à disposition une pression pilote (p_VS_D) pour la commande de la soupape de régulation de la pression (D3A, D3B) associée au deuxième élément de commande (D) prévu pour la réalisation du rapport de démultiplication ("R") pour la marche arrière et/ou pour la commande de la soupape de commande (D2A, D2B) associée au deuxième élément de commande (D).

4. Dispositif de commande selon une des revendications 1 à 3, **caractérisé en ce que** le signal de pression (p_sys) correspond au moins approximativement à une pression de système (p_sys) réglée par une soupape de pression de système (4).

5. Dispositif de commande selon une des revendications 1 à 4, **caractérisé en ce que** le signal de pression (p_sys) peut être amené au moins lorsque le levier de vitesses se trouve dans la position ("Pos R") pour la marche arrière par l'intermédiaire du coulisseau de sélection (2) à la soupape anti-enclenchement (SV_3) .

6. Dispositif de commande selon une des revendications 1 à 5, **caractérisé en ce que** la soupape de commande de la pression (B1) du premier élément de commande (B) pour la réalisation du rapport de démultiplication ("R") pour la marche arrière est ouverte lorsque le dispositif de commande de la boîte de vitesses est inactif et **en ce que** la soupape de régulation de la pression (B3) de ce premier élément de commande de marche arrière (B) est pressurisée avec la pression pilote (p_VS_B) nécessaire pour l'enclenchement.

7. Dispositif de commande selon une des revendications 1 à 6, **caractérisé en ce que** la soupape de commande de la pression (D1) du deuxième élément de commande (D) pour la réalisation du rapport de démultiplication ("R") pour la marche arrière est fermée lorsque le dispositif de commande de la boîte de vitesses est inactif et **en ce que** est inhibé un pilotage de la soupape de régulation de la pression (D3A, D3B) et de la soupape de commande (D2A, D2B) de ce deuxième élément de commande de marche arrière (D) avec la pression de pilotage (p_VS_D) réglable par l'intermédiaire de la soupape de régulation de la pression (D1).

8. Dispositif de commande selon une des revendications 1 à 7, **caractérisé en ce que** la soupape de régulation de la pression (D3A, D3B) et la soupape de commande (D2A, D2B) du deuxième élément de commande de marche arrière (D) peuvent être pilotées, lorsque le dispositif de commande de la boîte de vitesses est inactif, à l'aide de la pression de système (p_sys) présente au niveau de la soupape de régulation de la pression (D3A, D3B) et au niveau de la soupape de commande (D2A, D2B) libérée par le coulisseau de sélection (2) lorsque le levier de vitesses est dans une position "autre que celle de marche avant", en particulier dans une position ("Pos R") pour la marche arrière de façon à ce que au niveau du deuxième élément de commande de marche arrière (D) est présente la pression pilote (p_D) nécessaire pour son enclenchement.

9. Dispositif de commande selon une des revendications 1 à 8, **caractérisé en ce que**, le dispositif de commande de la boite de vitesses étant inactif, la pression de système (p_sys) prévue pour le pilotage de la soupape de régulation de la pression (D3A, D3B) et pour le pilotage de la soupape de commande (D2A, D2B) du deuxième élément de commande de marche arrière (D) peut être amenée par l'intermédiaire d'une soupape d'urgence de changement de vitesses (SV 2) vers la soupape de régulation de la pression (D3A, D3B) et la soupape de commande (D2A, D2B), sachant que la liaison entre le coulisseau de sélection (2) et la soupape de régulation de la pression (D3A, D3B) ainsi que entre le coulisseau de sélection (2) et la soupape de commande (D2A, D2B) est bloquée au niveau de la soupape d'urgence de changement de vitesses (SV_2) lorsque le dispositif de commande de la boîte de vitesses est actif.

10. Dispositif de commande selon une des revendications 1 à 9, **caractérisé en ce que** la soupape anti-enclenchement (SV_3) peut être commandée par un autre signal de pression (p_VS_A) pour varier une courbe caractéristique de soupape, le dispositif de commande de la boîte de vitesses étant actif, en plus dans la direction de sa deuxième position de commutation.

11. Dispositif de commande selon la revendication 10, **caractérisé en ce que** l'autre signal de pression (p_VS_A) correspond à une pression pilote (p_VS_A) réglable par une soupape de commande de pression (A1) fermée en état sans tension.

12. Dispositif de commande selon la revendication 10 ou 11, **caractérisé en ce que** l'autre signal de pression et le signal de pression sont amenés vers des surfaces actives séparées d'un coulisseau de soupape de la soupape anti-enclenchement.

13. Dispositif de commande selon la revendication 10 ou 11, **caractérisé en ce que** l'autre signal de pression (p_VS_A) est amené vers la même surface active d'un coulisseau de soupape (28) de la soupape anti-enclenchement (SV_3) que le signal de pression (p_sys), sachant que le signal de pression (p_sys) et l'autre signal de pression (p_VS_A) peuvent être amenés en alternance et par l'intermédiaire d'un sélecteur de circuit (30) sur la surface active.
